# EUROPÄISCHE PATENTSCHRIFT

(11) **EP 3 290 280 B1**
(45) Veröffentlichungstag und Bekanntmachung des Hinweises auf die Patenterteilung: **29.05.2019**
(21) Anmeldenummer: 17184329.5
(22) Anmeldetag: 01.08.2017
(51) Int. Cl.: B60T 15/18

(54) **MEHRFACHRELAISVENTIL SOWIE PNEUMATISCHES BREMSSYSTEM MIT WENIGSTENS EINEM MEHRFACHRELAISVENTIL**
MULTIPLE RELAY VALVE AND PNEUMATIC BRAKING SYSTEM WITH AT LEAST ONE MULTIPLE RELAY VALVE
PLURALITÉ DE VALVES-RELAIS AINSI QUE SYSTÈME DE FREINAGE PNEUMATIQUE POURVU D'AU MOINS UNE PLURALITÉ DE VALVES-RELAIS

(30) Priorität: 10.08.2016 DE 102016114831
(43) Veröffentlichungstag der Anmeldung: 07.03.2018
(73) Patentinhaber: KNORR-BREMSE Systeme für Nutzfahrzeuge GmbH, 80809 München (DE)
(72) Erfinder: PELLECUER, Francois, 80637 München (DE); FINKL, Florian, 80807 München (DE)

(56) Entgegenhaltungen:
- EP-A2- 1 571 516
- CN-B- 101 992 765
- CN-U- 204 110 020
- FR-A2- 2 347 243
- GB-A- 2 076 915
- JP-A- S5 043 371

## Beschreibung

Die vorliegende Erfindung betrifft ein Mehrfachrelaisventil zur Relaisbetätigung einer Fluidleitung mit mehrfacher Kreisabsicherung für ein Nutzfahrzeug, insbesondere für ein landwirtschaftlich genutztes Nutzfahrzeug sowie ein pneumatisches Bremssystem für ein Nutzfahrzeug.

Nutzfahrzeuge mit pneumatischen Bremsanlagen können nach ECE R13 und EU 2015/68 mit zwei unabhängigen pneumatischen Bremskreisen bestückt werden, welche üblicherweise auf die Vorder-, respektive auf die Hinterachse wirken.

Bei einigen Fahrzeugen, insbesondere bei landwirtschaftlichen Nutzfahrzeugen, ist es manchmal erwünscht, die Kreistrennung anders zu realisieren.

Die EP 2 581 280 A1 offenbart ein Doppelrelaisventil für Druckluftanlagen mit mehreren im Ventilgehäuse angeordneten konzentrischen Ventilkolben.

Die WO 01/89900 A2 offenbart ein Relaisventil mit einer Relaisventilfunktion und einer Modulationsventilfunktion mit mehreren im Ventilgehäuse angeordneten konzentrischen Ventilkolben. Ein weiteres Relaisventil nach Stand der Technik wird im Dokument CN 101 992 765 B offenbart.

Es ist die Aufgabe der vorliegenden Erfindung, ein Mehrfachrelaisventil sowie ein pneumatisches Bremssystem der eingangs genannten Art in vorteilhafter Weise weiterzubilden, insbesondere dahingehend, eine Absicherung mehrerer Bremskreise mit einem Mehrfachrelaisventil zu realisieren und eine alternative Bremsansteuerung an den Achsen des Fahrzeugs zu realisieren.

Diese Aufgabe wird erfindungsgemäß gelöst durch ein Mehrfachrelaisventil zur Relaisbetätigung einer Fluidleitung eines pneumatischen Bremssystems mit den Merkmalen des Anspruchs 1. Danach ist vorgesehen, dass ein Mehrfachrelaisventil zur Relaisbetätigung einer Fluidleitung eines pneumatischen Bremssystems mit mehrfacher Kreisabsicherung für ein Nutzfahrzeug bereitgestellt wird, wobei das Mehrfachrelaisventil wenigstens einen ersten Steueranschluss zum Anschluss an einen ersten Bremskreis und wenigstens einen zweiten Steueranschluss zum Anschluss an einen zweiten Bremskreis aufweist, wobei die Fluidleitung freigegeben ist, wenn zumindest einer der beiden Steueranschlüsse mit einem Öffnungsdruck beaufschlagt wird und wobei die Fluidleitung gesperrt ist, wenn beide Steueranschlüsse mit einem Schließdruck beaufschlagt sind, wobei der erste Steueranschluss mit einer ersten Ventilkammer in Fluidverbindung steht und der zweite Steueranschluss mit einer zweiten Ventilkammer in Fluidverbindung steht, wobei die erste Ventilkammer und die zweite Ventilkammer durch wenigstens zwei Dichtungen voneinander fluiddicht getrennt sind und wobei zwischen den Dichtungen im montierten Zustand eine Sekundärentlüftung angeordnet ist.

Die Erfindung basiert auf dem Grundgedanken, dass ein Relaisventil mit doppelter bzw. mehrfacher Ansteuerung vorgesehen wird, wobei ein Steueranschluss mit einem ersten Bremskreis, beispielsweise dem linken hinteren Bremskreis und der andere Steueranschluss mit dem rechten hinteren Bremskreis verbindbar bzw. verbunden sind. Dadurch wird es möglich, die Räder hinten links und rechts an der Hinterachse separat anzusteuern und den höheren der beiden Steuerdrücke an die Vorderachse weiterzugeben. Die Ausgestaltung des Mehrfachrelaisventils ermöglicht es zudem, eine separate Ansteuerung des linken und rechten Rades der Achse von beiden Betriebsbremskreisen zu ermöglichen, wobei die jeweils andere Achse den höheren der beiden Bremsdrücke erhält. Außerdem ist es möglich, durch die Beaufschlagung mit nur eines Steueranschlusses mit dem Öffnungsdruck die Fluidleitung des pneumatischen Bremssystems freizugeben und hierdurch die Bremse zu betätigen. Als Öffnungsdruck soll ein Druck verstanden werden, der zum Öffnen des Relaisventils dient und an einem der beiden Steueranschlüsse oder den Steueranschlüssen anliegt. Als Schließdruck ist demgegenüber ein Druck zu verstehen, der an den Steueranschlüssen anliegt, wenn das Relaisventil geschlossen ist bzw. geschlossen werden soll. Für das Sperren der Fluidleitung müssen beide Steueranschlüsse mit dem Schließdruck beauftragt sein. Der Schließdruck kann bereits darin bestehen, dass die beiden Steueranschlüsse drucklos geschaltet sind oder unter einen Schwellwert fallen, der nicht mehr für die Betätigung der Steueranschlüsse ausreicht. Durch die fluiddichte Trennung der ersten Ventilkammer mit der zweiten Ventilkammer wird es möglich, eine Separierung der beiden Bremskreise des pneumatischen Bremssystems zu ermöglichen. So kann die erste Ventilkammer dem ersten Bremskreis zugeordnet sein und die zweite Ventilkammer dem zweiten Bremskreis. Dadurch, dass zwei Dichtungen vorgesehen sind, kann eine doppelte Kreistrennung zwischen zwei Betriebsbremskreisen, die mit dem Mehrfachrelaisventil getrennt sind, eingehalten werden. Mittels zweier separater Dichtungen wird eine doppelte Isolierung herbeigeführt. Im montierten Zustand kann zwischen den Dichtungen eine Sekundärentlüftung angeordnet sein. Mittels der Sekundärentlüftung kann erreicht werden, dass bei einem Versagen einer der beiden Dichtungen ein Druckluftaustritt durch die Sekundärentlüftung erfolgt, was mit einem höhrbaren Leckage-Geräusch einhergehen kann. Hierdurch wird es möglich, ein Versagen einer der Dichtungen einfach und zuverlässig erkennen zu können.

Das Mehrfachrelaisventil kann ein Doppelrelaisventil sein.

Es kann vorgesehen sein, dass die Fluidleitung eine Druckluftleitung ist. Insbesondere kann es sich bei der Fluidleitung um die Hauptdruckluftleitung des pneumatischen Bremssystems handeln.

In der ersten Ventilkammer kann ein erster Steuerventilkolben und in der zweiten Ventilkammer ein zweiter Steuerventilkolben angeordnet sein, wobei der erste Steuerventilkolben bei anliegendem Öffnungssteuerdruck am ersten Steueranschluss den zweiten Steuerventilkolben betätigt, insbesondere mechanisch betätigt. Dadurch kann einfach sichergestellt werden, dass wenn der erste Steueranschluss mit einem Öffnungsdruck beaufschlagt wird, auf jeden Fall sowohl der erste Steuerventilkolben als auch der zweite Steuerventilkolben betätigt werden, auch wenn am zweiten Steueranschluss kein Öffnungsdruck anliegt.

Am ersten Steuerventilkolben können die wenigstens zwei Dichtungen angeordnet sein. Dies erleichtert die Montage und führt weiter zu einer sicheren Dichtfunktion der Dichtungen.

Die beiden Dichtungen können als radiale Dichtungen ausgeführt sein. Dabei kann es sich beispielsweise um aufvulkanisierte Dichtungen oder O-Ringe handeln. Durch radiale Dichtungen wird eine einfache Ausgestaltung des Ventilkolbens ermöglicht. Das Mehrfachrelaisventil kann ein Gehäuse aufweisen und die Dichtungen können gegen das Gehäuse angestellt sein. Dadurch lässt einfach und zuverlässig eine Dichtung zwischen der ersten Ventilkammer und der zweiten Ventilkammer realisieren.

Des Weiteren kann vorgesehen sein, dass die Sekundärentlüftung im Gehäuse angeordnet ist. Dies ermöglicht eine Anordnung und auch Wartung der Sekundärentlüftung, weil diese so sowohl während der Herstellung als auch im Betrieb gut zugänglich ist.

Insbesondere ist denkbar, dass die Sekundärentlüftung als eine Bohrung im Gehäuse ausgebildet ist. Dies ermöglicht eine einfache Positionierung der Sekundärentlüftung im Gehäuse. Außerdem wird hierdurch die Herstellung erleichtert.

Des Weiteren kann vorgesehen sein, dass ein Relaiskolben vorgesehen ist, der zur Sperrung und Freigabe der Fluidleitung dient. Durch den Relaiskolben kann eine einfache und zuverlässige Betätigung des Mehrfachrelaisventils ermöglicht werden, wobei mittels des Relaiskolbens eine Freigabe der Fluidleitung sowie ein Schließen der Fluidleitung ermöglicht werden kann. Der Relaiskolben kann durch den zweiten Steuerventilkolben betätigbar sein. Insbesondere kann vorgesehen sein, dass der Relaiskolben durch den zweiten Steuerventilkolben mechanisch betätigbar ist. Beispielsweise kann dadurch vergleichsweise einfach realisiert werden, dass durch ein entsprechendes Betätigen und Verschieben des oder der Steuerventilkolben der Relaiskolben derart verschoben wird, dass er die Fluidleitung freigibt.

Bei Anlegen des Schließdruckes an den beiden Steueranschlüssen kann der Relaiskolben beispielsweise durch eine Rückstellfeder in die Schließstellung zum Verschließen der Fluidleitung zurückgestellt werden.

Der Relaiskolben kann weiter einen Durchlass für einen Entlüftungsanschluss aufweisen. Hierdurch wird es möglich, über das Mehrfachrelaisventil auch eine Entlüftungsfunktion zu ermöglichen.

Des Weiteren betrifft die vorliegende Erfindung ein pneumatisches Bremssytem für ein Nutzfahrzeug, insbesondere ein landwirtschaftlich genutztes Nutzfahrzeug mit wenigstens einem Mehrfachrelaisventil.

Die erste Ventilkammer kann dabei mit einem ersten Betriebsbremskreis des pneumatischen Bremssystems in Verbindung stehen und die zweite Ventilkammer mit einem zweiten Betriebsbremskreis des pneumatischen Bremssystems in Verbindung stehen.

Die pneumatische Trennung von erstem Betriebsbremskreis und zweitem Betriebsbremskreis kann durch die wenigstens zwei Dichtungen bewirkt werden.

Darüber hinaus ist möglich, dass eine Leckage einer der beiden Dichtungen zu einem Druckluftaustritt durch die Sekundärentlüftung führt, wobei die Sekundärentlüftung derart beschaffen ist, dass ein Druckluftaustritt durch die Sekundärentlüftung zu einem höhrbaren Leckage-Geräusch führt.

Ferner ist denkbar, dass der erste Betriebsbremskreis und der zweite Betriebsbremskreis jeweils einem Rad der Hinterachse des Nutzfahrzeugs zugeordnet ist und dass die Fluidleitung zur Ansteuerung einer Bremse wenigstens eines Rades einer Vorderachse des Nutzfahrzeugs verwendet wird.

Weitere Einzelheiten und Vorteile der Erfindung sollen nun anhand eines in der Zeichnung dargestellten Ausführungsbeispiels näher erläutert werden.

Es zeigen
- Fig. 1: eine schematische Darstellung eines Ausführungsbeispiels eines erfindungsgemäßen Mehrfachrelaisventils in der nicht betätigten Stellung;
- Fig. 2: das Mehrfachrelaisventil gemäß Fig. 1 in der betätigten Stellung;
- Fig. 3: eine schematische Darstellung einer beispielhaften Bremsanlage; und
- Fig. 4: ein weiteres Ausführungsbeispiel eines Ausführungsbeispiels eines pneumatischen Bremssystems.

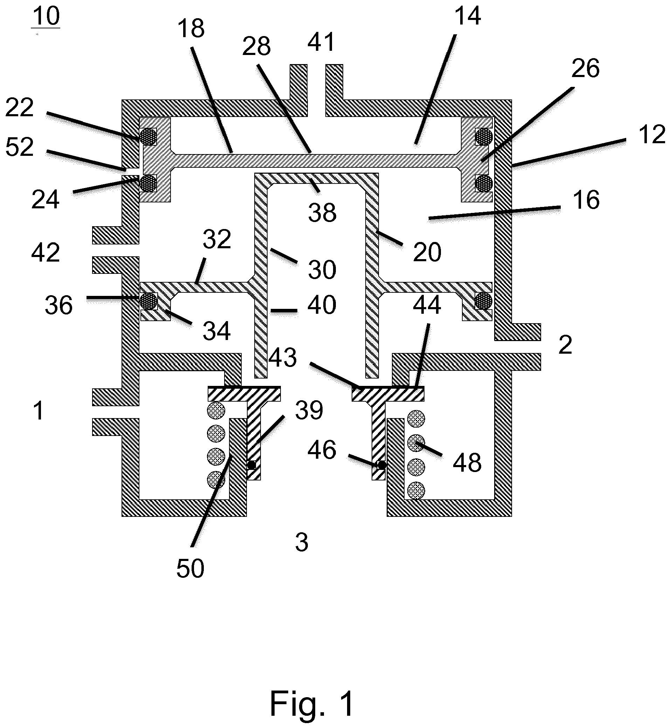

**Fig. 1** zeigt in schematischer Schnittdarstellung ein Ausführungsbeispiel eines erfindungsgemäßen Mehrfachrelaisventils 10, hier ausgeführt als Doppelrelaisventil 10. Das Doppelrelaisventil 10 weist ein Gehäuse 12 auf.

Im Gehäuse 12, das zylindrisch ausgeführt ist, ist eine erste Ventilkammer 14 und eine zweite Ventilkammer 16 vorgesehen.

Die erste Ventilkammer 14 wird durch den ersten Steuerventilkolben 18 von der zweiten Ventilkammer 16 abgegrenzt, so dass die erste Ventilkammer 14 durch einen Teil der Innenwand des Gehäuses 12 und des Steuerventilkolbens 18 begrenzt wird.

Die zweite Ventilkammer 16 wird durch einen Teil der Innengehäusewandung des Gehäuses 12, durch die der ersten Ventilkammer 14 abgewandte Seite des Steuerventilkolbens 18 und durch die dem ersten Steuerventilkolben 18 zugewandten Seite des zweiten Steuerventilkolbens 20 begrenzt.

Der Steuerventilkolben 18 weist zwei radiale Dichtungen 22 und 24 auf, die in einem Radialbund 26 des Steuerventilkolbens 18 gehalten sind. Der Steuerventilkolben 18 weist weiter eine zentrale Kreisplatte 28 auf, die mittig einstückig an den Radialbund 26 angeformt ist, so dass sich insgesamt eine tellerartige Struktur für den ersten Steuerventilkolben 18 ergibt.

Der zweite Steuerventilkolben 20 weist einen zentral angeordneten, rohrartigen Zylinderabschnitt 30 auf, der im montierten Zustand auf der dem ersten Steuerventilkolben 18 zugewandten Seite einen zylindrischen, geschlossenen Betätigungsabschnitt 38 aufweist und auf der im montierten Zustand dem ersten Steuerventilkolben 18 abgewandten Seite einen offenen Rohrzylinderabschnitt 40, der sich aus der Kolbenplatte 32 ebenso wie der Abschnitt 38 heraus erhebt.

Auch der zweite Steuerventilkolben 20 weist einen Radialbund 34 auf, in dem jedoch eine einzige radiale Dichtung 36 gehalten ist.

Das Doppelrelaisventil 10 weist weiter einen im Wesentlichen zylindrisch aufgebauten Relaiskolben 39 auf, der einen T-Querschnitt förmigen, umlaufenden Axialdichtbund 43 mit einer daran angeordneten Axialdichtung 44 aufweist.

Diese Axialdichtung 44 ist dafür vorgesehen, gegen einen Gehäuseabschnitt des Gehäuses 12 dichtend angestellt zu werden.

Der Relaiskolben 39 weist weiter auch eine Radialdichtung 46 auf, die ebenfalls dichtend gegen einen Gehäuseabschnitt des Gehäuses 12 angestellt ist.

Zur Rückstellung des Relaiskolbens 39 ist ferner eine Rückstellfeder 48 vorgesehen, die gegen den Axialbund 43 auf der einen Seite und gegen einen Gehäuseabschnitt des Gehäueses 12 auf der anderen Seite angestellt ist. Die Rückstellfeder 48 wird über einen Radialführungsabschnitt 50 geführt.

Auf der Innenseite des Führungsabschnitts 50 des Gehäuses 12 ist auch der Relaiskolben 39 mit seinem Zylinderabschnitt geführt und die Radialdichtung 46 befindet sich dichtend angestellt zwischen dem Relaiskolben 39 und dem Führungsabschnitt 50.

Das Gehäuse 12 weist weiter eine Sekundärentlüftung 52 auf, die durch eine Bohrung durch die Gehäusewandung des Gehäuses 12 realisiert ist.

Die Sekundärentlüftung 52 ist dabei derart angeordnet, dass im montierten Zustand die Sekundärentlüftung 52 stets sich im Ringspalt, der sich zwischen den Dichtungen 22 und 24 befindet, liegt.

In Fig. 1 ist die Sekundärentlüftung an der Außenwandung des Gehäuses 12 gezeigt.

Grundsätzlich ist auch jegliche andere Anordnung der Sekundärentlüftung denkbar, beispielsweise nach innen über die Hauptentlüftung.

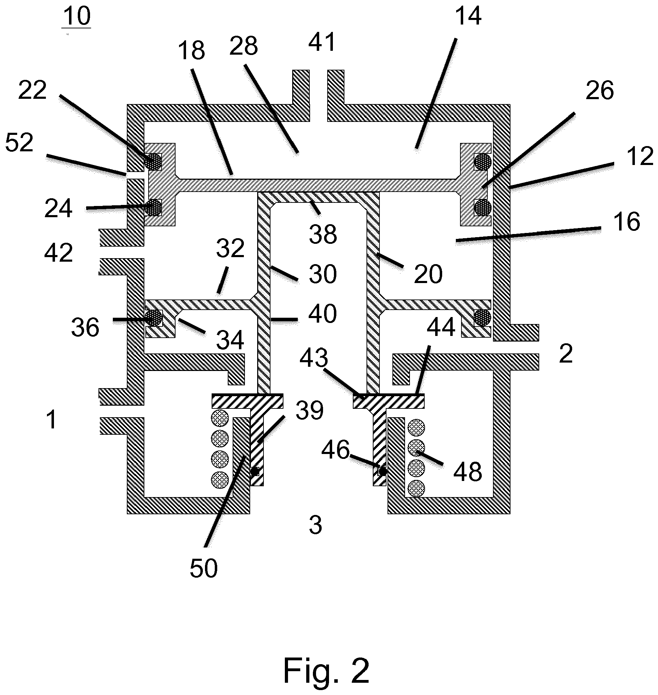

Fig. 1 zeigt das Doppelrelaisventil 10 in nicht betätigtem Zustand und Fig. 2 das Doppelrelaisventil 10 in betätigtem Zustand.

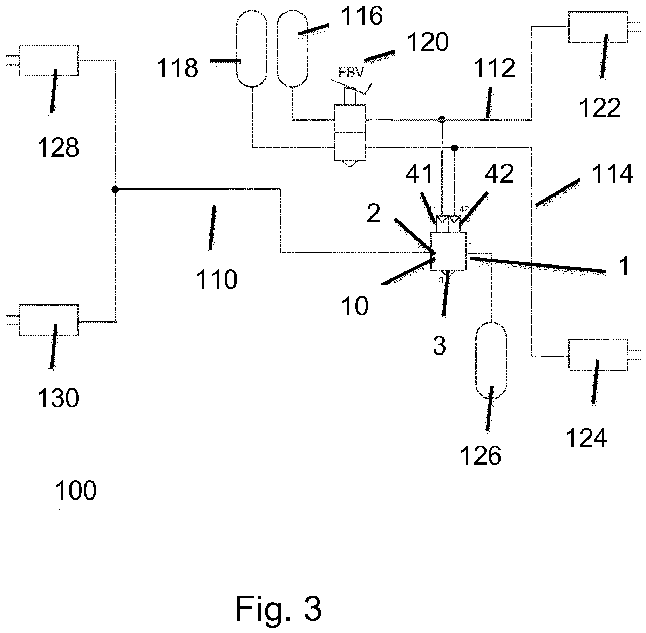

**Fig. 3** zeigt ein erstes Ausführungsbeispiel eines pneumatischen Bremssystems 100 für ein Nutzfahrzeug, hier ein landwirtschaftlich genutztes Nutzfahrzeug. Das Relaisventil 10 dient zur Sperrung bzw. Freigabe der Fluidleitung 110, die eine Pneumatikleitung ist.

Die erste Ventilkammer 14 steht mit einem Steueranschluss 41 des Doppelrelaisventils 10 in Verbindung.

Die zweite Ventilkammer 16 steht mit einem zweiten Steueranschluss 42 des Doppelrelaisventils 10 in Verbindung.

Die Anschlüsse 1 und 2 der Fluidleitung 110 sind in den Fig. 1, 2 und 3 jeweils gezeigt und die Anschlüsse 1 und 2 sind je nach Stellung des Relaiskolbens 39 entweder miteinander verbunden (vgl. Fig. 2) oder voneinander getrennt (vgl. Fig. 1).

Das pneumatische Bremssystem 100 weist weiter einen ersten Bremskreislauf 112 für die Ansteuerung einer Bremsvorrichtung 122, hier eines Federspeicherbremszylinders 122 des rechten Rades der Hinterachse auf.

Der zweite Bremskreislauf 114 dient zur Ansteuerung einer Bremsvorrichtung 124, hier eines Federspeicherbremszylinders 124 des linken Rades der Hinterachse des Nutzfahrzeuges.

Dem ersten Bremskreislauf 112 ist ein erster Kompressor 116 oder eine Druckluftquelle 116 zugeordnet, während dem zweiten Bremskreislauf 114 eine zweite Druckluftquelle 118 zugeordnet ist. Um den ersten und zweiten Bremskreislauf 112, 114 zu betätigen, ist ein Fußbremsventil 120 vorgesehen, wobei durch Betätigung des Fußbremsventils 120 die Druckluftquelle 116 über die Anschlüsse 11 und 21 den ersten Bremskreislauf 112 so schaltet, dass der Federspeicherbremszylinder 122 betätigt wird.

Die Betätigung des Fußbremsventils 120 bewirkt weiter, dass die Druckluftquelle 118 über die Anschlüsse 12 und 22 den Federspeicherbremszylinder 124 betätigt.

Die Fluidleitung 110 versorgt die beiden Bremsvorrichtungen 128, 130, hier Federspeicherbremszylinder 128, 130 der Vorderachse mit Druckluft aus der Druckluftquelle 126 bzw. Kompressor 126.

Die Funktion des in den Fig. 1 bis 3 gezeigten Doppelrelaisventils 10 sowie des pneumatischen Bremssystems 100 lässt sich wie folgt beschreiben :
Das Doppelrelaisventil 10 lässt sich derart schalten, dass die Fluidleitung 110 bzw. die Fluidverbindung zwischen dem Anschluss 1 und dem Anschluss 2 dann freigegeben wird, wenn zumindest einer der beiden Steueranschlüsse 41 oder 42 mit einem Öffnungsdruck beaufschlagt ist, so dass sich entweder zumindest der zweite Steuerventilkolben 20 in Richtung des Relaiskolbens 39 bewegt, um diesen zu betätigen und damit die Fluidverbindung zwischen dem ersten Steueranschluss 1 und dem zweiten Steueranschlusss 2 der Fluidleitung 110 freizugeben. Sofern zumindest über den Steueranschluss 41 ein Öffnungsdruck gegen den ersten Steuerventilkolben 18 angestellt wird, so dass sich dieser in Richtung des Relaiskolbens 39 bewegt, ist es unerheblich, ob ein Öffnungsdruck am zweiten Steueranschluss 42 anliegt, da jedenfalls der erste Steuerventilkolben 18 sich in Richtung des Relaiskolbens 39 bewegt und sodann mechanisch den zweiten Steuerventilkolben 20 betätigt, so dass dieser wiederum den Relaiskolben 39 betätigt und damit die Fluidverbindung zwischen dem Anschluss 1 und Anschluss 2 der Fluidleitung 110 frei gibt. Dies ist beispielsweise in Fig. 2 gezeigt.

Sofern beide Steueranschlüsse 41 und 42 mit einem Schließdruck beaufschlagt sind, d.h. nicht bedruckt sind, wird über die Rückstellfeder 48 der Relaiskolben 39 zurückgestellt, so dass die Axialdichtung 44 gegen den Gehäuseansatz des Gehäuses 12 angestellt ist und hierdurch die Fluidverbindung zwischen dem Anschluss 1 und dem Anschluss 2 nicht mehr freigegeben ist. Der noch in dem Anschluss 2 verbindliche Druck kann über den Entlüftungsanschluss 3 entweichen und an die Atmosphäre abgegeben werden.

Wie weiter mit Blick auf Fig. 3 ersichtlich ist, kann das linke und rechte Rad bzw. die zugehörige Bremse der Hinterachse von den beiden Betriebsbremskreisen 112, 114 jeweils separat angesteuert werden und die Vorderachse bzw. die dort befindlichen Federspeicherbremszylinder 122, 124 erhalten den höheren der beiden Bremsdrücke. So kann beispielsweise in einem Fall, in dem einer der Betriebsbremskreise 112 oder 114 nicht mehr ausreichend bedruckt werden kann, z.B. wegen einer Leckage, trotzdem sichergestellt werden, dass wenigstens eines der Hinterräder, aber jedenfalls beide Vorderräder gebremst werden können.

In dem Ausführungsbeispiel gemäß Fig. 3 werden die den Räder links und rechts der Hinterachse zugeordneten Federspeicherbremszylinder 122, 124 separat angesteuert und der höhere der beiden Drücke wird an die Vorderachse weitergegeben.

Der Steueranschluss 41 des Doppelrelaisventils 10 ist dabei mit dem ersten Betriebsbremskreis 112 des rechten Hinterrades und der Steueranschluss 42 mit dem zweiten Betriebsbremskreis 114 des linken Hinterrades verbunden.

Um eine doppelte Kreistrennung zwischen den beiden Betriebsbremskreisen 112 und 114 nach ECE R13 und EU 2015/68 einzuhalten, sind die beiden Betriebsbremskreise 112 und 114 im Doppelrelaisventil 10 mittels der beiden separaten Dichtungen 22, 24 voneinander doppelt isoliert und auch mit der Sekundärentlüftung 52 bestückt.

Durch die Sekundärentlüftung 52 wird erreicht, dass bei Versagen einer der beiden Dichtungen 22 bzw. 24 es zu einem hörbaren Leckage-Geräusch kommen würde und dass dadurch eine einfache Fehlerbestimmung ermöglicht wird.

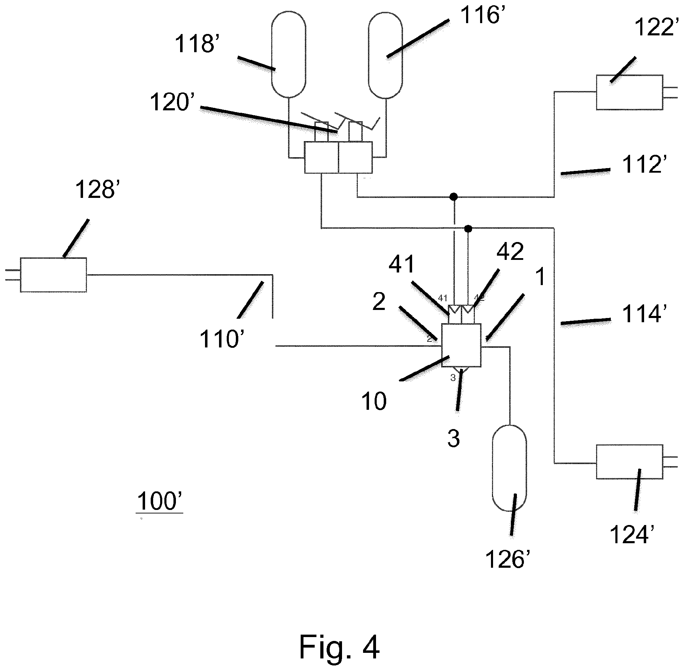

**Fig. 4** zeigt eine Alternative zu dem Ausführungsbeispiel gem. Fig. 3.

Das pneumatische Bremssystem 100' weist im Wesentlichen sämtliche strukturellen und funktionalen Merkmale des pneumatischen Bremssystems 100 gemäß Fig. 3 und wie vorstehend beschrieben auf.

Der einzige Unterschied besteht im Wesentlichen darin, dass die beiden Betriebsbremskreise 112' und 114' separat über ein Doppelpedal am Fußbremsventil 120' angesteuert werden können.

Identische Merkmale sind in Fig. 4 mit gestrichenen Bezugszeichen versehen. Das pneumatische Bremssystem 100' weist somit auch eine Fluidleitung 110', Betriebsbremskreise 112', 114', Kompressoren 116', 118', 126' bzw. Druckluftquelle 116', 118', 126' und Bremsvorrichtungen 122', 124', 128' bzw. Federspeicherbremszylinder 122', 124', 128' auf.

Der Einfachheit halber ist in Fig. 4 kein gesonderter Federspeicherbremszylinder 130, wie im Ausführungsbeispiel gem. Fig. 3 gezeigt.

### BEZUGSZEICHENLISTE

- 10: Mehrfachrelaisventil / Doppelrelaisventil
- 12: Gehäuse
- 14: erste Ventilkammer
- 16: zweite Ventilkammer
- 18: erster Steuerventilkolben
- 20: zweiter Steuerventilkolben
- 22: radiale Dichtung
- 24: radiale Dichtung
- 26: Radialbund
- 28: zentrale Kreisplatte
- 30: zentral angeordneter, rohrartiger Zylinderabschnitt
- 32: Kolbenplatte
- 34: Radialbund
- 36: radiale Dichtung
- 38: zylindrisch, geschlossener Betätigungsabschnitt
- 39: Relaiskolben
- 40: offener Rohrzylinderabschnitt
- 41: Steueranschluss
- 42: zweiter Steueranschluss
- 43: T-Querschnitt förmiger, umlaufender Axialdichtbund
- 44: Axialdichtung
- 46: Radialdichtung
- 48: Rückstellfeder
- 50: Radialführungsabschnitt
- 52: Sekundärentlüftung

- 100: pneumatisches Bremssystem
- 110: Fluidleitung
- 112: erster Bremskreislauf
- 114: zweiter Bremskreislauf
- 116: Kompressor / Druckluftquelle
- 118: zweite Druckluftquelle
- 120: Fußbremsventil
- 122: Bremsvorrichtung, Federspeicherbremszylinder
- 124: Bremsvorrichtung, Federspeicherbremszylinder
- 126: Druckluftquelle
- 128: Bremsvorrichtung, Federspeicherbremszylinder
- 130: Bremsvorrichtung, Federspeicherbremszylinder

- 100': pneumatisches Bremssystem
- 110': Fluidleitung
- 112': Betriebsbremskreis
- 114': Betriebsbremskreis
- 116': Kompressor / Druckluftquelle
- 118': zweite Druckluftquelle
- 120': Fußbremsventil
- 122': Bremsvorrichtung, Federspeicherbremszylinder
- 124': Bremsvorrichtung, Federspeicherbremszylinder
- 126': Druckluftquelle
- 128': Bremsvorrichtung, Federspeicherbremszylinder

## Patentansprüche

1. Mehrfachrelaisventil (10) zur Relaisbetätigung einer Fluidleitung (110) eines pneumatischen Bremssystems (100) mit mehrfacher Kreisabsicherung für ein Nutzfahrzeug, insbesondere ein landwirtschaftlich genutztes Nutzfahrzeug, mit wenigstens einem ersten Steueranschluss (41) zum Anschluss an einen ersten Bremskreis (112), und mit wenigstens einem zweiten Steueranschluss (42) zum Anschluss an einen zweiten Bremskreis (114), wobei die Fluidleitung (110) freigegeben ist, wenn zumindest einer der beiden Steueranschlüsse (41, 42) mit einem Öffnungsdruck beaufschlagt ist, und wobei die Fluidleitung (110) gesperrt ist, wenn beide Steueranschlüsse (41, 42) mit einem Schließdruck beaufschlagt sind, wobei der erste Steueranschluss (41) mit einer ersten Ventilkammer (14) in Fluidverbindung steht und der zweite Steueranschluss (42) mit einer zweiten Ventilkammer (16) in Fluidverbindung steht, wobei die erste Ventilkammer (14) und die zweite Ventilkammer (16) durch wenigstens zwei Dichtungen (22, 24) voneinander fluiddicht getrennt sind und **dadurch gekennzeichnet, dass** zwischen den Dichtungen (22, 24) im montierten Zustand eine Sekundärentlüftung (52) angeordnet ist.

2. Mehrfachrelaisventil (10) nach Anspruch 1,
**dadurch gekennzeichnet, dass**
die Fluidleitung (110) eine Druckluftleitung ist.

3. Mehrfachrelaisventil (10) nach Anspruch 1 oder Anspruch 2,
**dadurch gekennzeichnet, dass**
in der ersten Ventilkammer (14) ein erster Steuerventilkolben (18) und in der zweiten Ventilkammer (16) ein zweiter Steuerventilkolben (20) angeordnet ist, wobei der erste Steuerventilkolben (18) bei anliegendem Öffnungssteuerdruck am ersten Steueranschluss (41) den zweiten Steuerventilkolben (20) betätigt, insbesondere mechanisch betätigt.

4. Mehrfachrelaisventil (10) nach Anspruch 3,
**dadurch gekennzeichnet, dass**
am ersten Steuerventilkolben (18) die wenigstens zwei Dichtungen (22, 24) angeordnet sind.

5. Mehrfachrelaisventil (10) nach einem der vorhergehenden Ansprüche,
**dadurch gekennzeichnet, dass**
die Dichtungen (22, 24) radiale Dichtungen (22, 24) sind.

6. Mehrfachrelaisventil (10) nach einem der vorhergehenden Ansprüche,
**dadurch gekennzeichnet, dass**
das Mehrfachrelaisventil (10) ein Gehäuse (12) aufweist und dass die Dichtungen (22, 24) gegen das Gehäuse angestellt sind.

7. Mehrfachrelaisventil (10) nach Anspruch 6,
**dadurch gekennzeichnet, dass**
die Sekundärentlüftung (52) im Gehäuse (12) angeordnet ist.

8. Mehrfachrelaisventil (10) nach Anspruch 6 oder Anspruch 7,
**dadurch gekennzeichnet, dass**
das die Sekundärentlüftung (52) als eine Bohrung im Gehäuse (12) ausgebildet ist.

9. Mehrfachrelaisventil (10) nach einem der vorhergehenden Ansprüche,
**dadurch gekennzeichnet, dass**
ein Relaiskolben (39) vorgesehen ist, der zur Sperrung und Freigabe der Fluidleitung (110) dient.

10. Mehrfachrelaisventil (10) nach Anspruch 9,
**dadurch gekennzeichnet, dass**
der Relaiskolben (39) durch den zweiten Steuerventilkolben (20) betätigbar ist, insbesondere mechanisch betätigbar ist.

11. Mehrfachrelaisventil (10) nach einem der Ansprüche 8 bis 10,
**dadurch gekennzeichnet, dass**
der Relaiskolben (39) einen Durchlass zu einem Entlüftungsanschluss aufweist.

12. Pneumatisches Bremssystem (100) für ein Nutzfahrzeug, insbesondere ein landwirtschaftlich genutztes Nutzfahrzeug, mit wenigstens einem Mehrfachrelaisventil (10) nach einem der vorhergehenden Ansprüche.

13. Pneumatisches Bremssystem (100) nach Anspruch 12,
**dadurch gekennzeichnet, dass**
die erste Ventilkammer (14) mit einem ersten Betriebsbremskreis (112) des pneumatischen Bremssystems (100) in Verbindung steht und dass die zweite Ventilkammer (16) mit einem zweiten Betriebsbremskreis (114) des pneumatischen Bremssystems (100) in Verbindung steht.

14. Pneumatisches Bremssystem (100) nach Anspruch 13,
**dadurch gekennzeichnet, dass**
die pneumatische Trennung von erstem Betriebsbremskreis (112) und zweitem Betriebsbremskreis (114) durch die wenigstens zwei Dichtungen (22, 24) bewirkt wird.

15. Pneumatisches Bremssystem (100) nach einem der Ansprüche 12 bis 14,
**dadurch gekennzeichnet, dass**
eine Leckage einer der beiden Dichtungen (22, 24) zu einem Druckluftaustritt durch die Sekundärentlüftung (52) führt, wobei die Sekundärtentlüftung (52) derart beschaffen ist, dass ein Druckluftaustritt durch die Sekundärentlüftung (52) zu einem hörbaren Leckage-Geräusch führt.

16. Pneumatisches Bremssystem (100) nach einem der Ansprüche 13 bis 15,
**dadurch gekennzeichnet, dass**
der erste Betriebsbremskreis (112) und der zweite Betriebsbremskreis (114) jeweils einem Rad der Hinterachse des Nutzfahrzeugs zugeordnet ist und dass die Fluidleitung (110) zur Ansteuerung einer Bremse wenigstens eines Rades einer Vorderachse des Nutzfahrzeugs verwendet wird.

## Claims

1. Multiple relay valve (10) for the relay actuation of a fluid line (110) of a pneumatic brake system (110) with multiple circuit protection for a commercial vehicle, in particular a commercial vehicle used in agriculture, with at least one first control port (41) for connection to a first brake circuit (112) and with at least one second control port (42) for connection to a second brake circuit (114), wherein the fluid line (110) is enabled if an opening pressure is applied to at least one of the control ports (41, 42), and wherein the fluid line (110) is blocked if a closing pressure is applied to both control ports (41, 42), wherein the first control port (41) is in fluid connection with a first valve chamber (14) and the second control port (42) is in fluid connection with a second valve chamber (16), wherein the first valve chamber (14) and the second valve chamber (16) are separated from each other in a fluid-tight manner by at least two seals (22, 24),
**characterised in that**
a secondary vent (52) is located between the seals (22, 24) in the assembled state.

2. Multiple relay valve (10) according to claim 1,
**characterised in that**
the fluid line (110) is a compressed air line.

3. Multiple relay valve (10) according to claim 1 or 2,
**characterised in that**
a first control valve piston (18) is located in the first valve chamber (14) and a second control valve piston (20) is located in the second valve chamber (16), wherein the first control valve piston (18) actuates the second control valve piston (20), in particular mechanically, if the opening control pressure is applied to the first control port (41).

4. Multiple relay valve (10) according to claim 3,
**characterised in that**
the at least two seals (22, 24) are located on the first control valve piston (18).

5. Multiple relay valve (10) according to any of the preceding claims,
**characterised in that**
the seals (22, 24) are radial seals (22, 24).

6. Multiple relay valve (10) according to any of the preceding claims,
**characterised in that**
the multiple relay valve (10) has a housing (12), and **in that** the seals (22, 24) are placed against the housing (12).

7. Multiple relay valve (10) according to claim 6,
**characterised in that**
the secondary vent (52) is located in the housing (12).

8. Multiple relay valve (10) according to claim 6 or 7,
**characterised in that**
the secondary vent (52) is designed as a bore in the housing (12).

9. Multiple relay valve (10) according to any of the preceding claims,
**characterised in that**
a relay piston (39) used for blocking and enabling the fluid line (110) is provided.

10. Multiple relay valve (10) according to claim 9,
**characterised in that**
the relay piston (39) is actuable, in particular mechanically, by the second control valve piston (20).

11. Multiple relay valve (10) according to any of claims 8 to 10'
**characterised in that**
the relay piston (39) has a through-passage to a vent port.

12. Pneumatic brake system (100) for a commercial vehicle, in particular a commercial vehicle used in agriculture, with at least one multiple relay valve (10) according to any of the preceding claims.

13. Pneumatic brake system (100) according to claim 12,
**characterised in that**
the first valve chamber (14) is connected to a first service brake circuit (112) of the pneumatic brake system (100) and the second valve chamber (16) is connected to a second service brake circuit (114) of the pneumatic brake system (100).

14. Pneumatic brake system (100) according to claim 13,
**characterised in that**
the pneumatic separation of the first service brake circuit (112) and the second service brake circuit (114) is effected by the at least two seals (22, 24).

15. Pneumatic brake system (100) according to any of claims 12 to 14,
**characterised in that**
a leakage of one of the two seals (22, 24) leads to an escape of compressed air through the secondary vent (52), the secondary vent (52) being constituted such that an escape of compressed air through the secondary vent (52) leads to an audible leakage sound.

16. Pneumatic brake system (100) according to any of claims 13 to 15,
**characterised in that**
the first service brake circuit (112) and the second service brake circuit (114) are each assigned to a rear axle of the commercial vehicle, and **in that** the fluid line (110) is used for activating a brake of at least one wheel of a front axle of the commercial vehicle.

## Revendications

1. Vanne (10) relais multiple pour l'actionnement en relais d'un conduit (110) pour du fluide d'un système (100) de frein pneumatique, ayant de multiples sécurités de circuit pour un véhicule utilitaire, notamment pour un véhicule utilitaire utilisé en agriculture, comprenant au moins un premier raccord (41) de commande de raccordement à un premier circuit (112) de frein et comprenant au moins un deuxième raccord (42) de commande de raccordement à un deuxième circuit (114) de frein, le conduit (110) pour du fluide étant dégagé, si au moins l'un des deux raccords (41, 42) de commande est soumis à une pression d'ouverture, et le conduit (110) pour du fluide étant obturé, si les deux raccords (41, 42) de commande sont soumis à une pression de fermeture, le premier raccord (41) de commande étant en communication fluidique avec une première chambre (14) de vanne et le deuxième raccord (42) de commande étant en communication fluidique avec une deuxième chambre (16) de vanne, la première chambre (14) de vanne et la deuxième chambre (16) de vanne étant séparées d'une manière étanche au fluide l'une de l'autre par au moins deux garnitures (22, 24) d'étanchéité
et **caractérisée en ce qu'**
une purge (52) secondaire est montée, à l'état monté, entre les deux garnitures (22, 24) d'étanchéité.

2. Vanne (10) relais multiple suivant la revendication 1,
**caractérisée en ce que**
le conduit (110) pour du fluide est un conduit pour de l'air comprimé.

3. Vanne (10) relais multiple suivant la revendication 1 ou la revendication 2,
**caractérisée en ce que**,
dans la première chambre (14) de vanne, est monté un premier piston (18) de vanne de commande et, dans la deuxième chambre (16) de vanne, est monté un deuxième piston (20) de vanne de commande, le premier piston (18) de vanne de commande actionnant, notamment mécaniquement, le deuxième piston (20) de vanne de commande, lorsqu'une pression de commande d'ouverture est appliquée au premier raccord (41) de commande.

4. Vanne (10) relais multiple suivant la revendication 3,
**caractérisée en ce que**
les au moins deux garnitures (22, 24) d'étanchéité sont montées sur le premier piston (18) de vanne de commande.

5. Vanne (10) relais multiple suivant l'une des revendications précédentes,
**caractérisée en ce que**
les garnitures (22, 24) d'étanchéité sont des garnitures (22, 24) d'étanchéité radiales.

6. Vanne (10) relais multiple suivant l'une des revendications précédentes,
**caractérisée en ce que**
la vanne (10) relais multiple a un corps (12) et **en ce que** les garnitures (22, 24) d'étanchéité sont mises sur le corps.

7. Vanne (10) relais multiple suivant la revendication 6,
**caractérisée en ce que**
la purge (52) secondaire est disposée dans le corps (12).

8. Vanne (10) relais multiple suivant la revendication 6 ou la revendication 7,
**caractérisée en ce que**
la purge (52) secondaire est constituée sous la forme d'un trou dans le corps (12).

9. Vanne (10) relais multiple suivant l'une des revendications précédentes,
**caractérisée en ce qu'**
il est prévu un piston (39) relais, qui sert à obturer et à dégager le conduit (110) pour du fluide.

10. Vanne (10) relais multiple suivant la revendication 9,
**caractérisée en ce que**
le piston (39) relais peut être actionné, notamment mécaniquement, par le deuxième piston (20) de vanne de commande.

11. Vanne (10) relais multiple suivant l'une des revendications 8 à 10,
**caractérisée en ce que**
le piston (39) relais a une traversée pour un raccord de purge.

12. Système (100) de frein pneumatique d'un véhicule utilitaire, notamment d'un véhicule utilitaire utilisé en agriculture, comprenant au moins une vanne (10) relais multiple suivant l'une des revendications précédentes.

13. Système (100) de frein pneumatique suivant la revendication 12,
**caractérisé en ce que**
la première chambre (14) de vanne est en liaison avec un premier circuit (112) de frein de service du système (100) de frein pneumatique et **en ce que** la deuxième chambre (16) de vanne est en liaison avec un deuxième circuit (114) de frein de service du système (100) de frein pneumatique.

14. Système (100) de frein pneumatique suivant la revendication 13,
**caractérisé en ce que**
la séparation pneumatique du premier circuit (112) de frein de service et du deuxième circuit (114) de frein de service est obtenue par les au moins deux garnitures (22, 24) d'étanchéité.

15. Système (100) de frein pneumatique suivant l'une des revendications 12 à 14,
**caractérisé en ce qu'**
une fuite de l'une des deux garnitures (22, 24) d'étanchéité provoque une sortie d'air comprimé par la purge (52) secondaire, la purge (52) secondaire étant telle qu'une sortie d'air comprimé par la purge (52) d'air secondaire donne un bruit de fuite audible.

16. Système (100) de frein pneumatique suivant l'une des revendications 13 à 15,
**caractérisé en ce que**
le premier circuit (112) de frein de service et le deuxième circuit (114) de frein de service sont associés chacun à une roue de l'essieu arrière du véhicule utilitaire et **en ce que** le conduit (110) pour un fluide est utilisé pour commander un frein d'au moins une roue d'un essieu avant du véhicule utilitaire.
